# EUROPÄISCHE PATENTSCHRIFT

(11) **EP 3 800 437 B1**
(45) Veröffentlichungstag und Bekanntmachung des Hinweises auf die Patenterteilung: **01.05.2024**
(21) Anmeldenummer: 20199740.0
(22) Anmeldetag: 02.10.2020
(51) Int. Cl.: G01B 3/06, F16C 11/10

(54) **GLIEDERMASSSTAB**
FOLDING RULER
MÈTRE PLIANT

(30) Priorität: 04.10.2019 DE 202019105481 U
(43) Veröffentlichungstag der Anmeldung: 07.04.2021
(73) Patentinhaber: STABILA Messgeräte Gustav Ullrich GmbH, 76855 Annweiler (DE)
(72) Erfinder: KALLABIS, Gabriel, 76848 Spirkelbach (DE); ZEMCÍK, Marek, 695 03 Hodonín (CZ); VACHEK, Pavel, 696 12 Hovorany (CZ); ZGAZAR, Zdenek, 696 81 Bzenec (CZ)
(74) Vertreter: Stoffregen, Hans-Herbert

(56) Entgegenhaltungen:
- EP-A1- 2 677 269
- WO-A1-2006/086933
- DE-A1- 2 449 877
- US-A- 1 907 459

## Beschreibung

Die Erfindung bezieht sich auf einen Gliedermaßstab mit langgestreckten flachen Gliedern, die paarweise über eine Gelenkverbindung miteinander und drehbar um eine Achse verbunden sind, wobei die Gelenkverbindung eine erste mit einem ersten Glied und eine zweite mit einem zweiten Glied verbundene Gelenkplatte aufweist, und wobei
- die erste Gelenkplatte zwei erste Rastvorsprünge aufweist, die diametral zu der Achse angeordnet sind, und
- die zweite Gelenkplatte zwei Rastaussparungen aufweist,
wobei die Gelenkplatten in einer ersten Stellung und in einer von der ersten Stellung abweichenden zweiten Stellung der Glieder ineinanderrasten bzw. zueinander verrastbar sind.

Ein entsprechender Gliedermaßstab ist der EP 2 677 269 A1 zu entnehmen. Um die Glieder in zwei unterschiedlichen Stellungen zu verrasten, gehen von einer ersten Gelenkplatte zwei Federzungen mit Rastvorsprüngen und von einer dieser zugeordneten und von einem anderen Glied des Gliedermaßstabs ausgehenden zweiten Gelenkplatte vier Rastaussparrungen aus. Um ein spielfreies Verrasten sicherzustellen, müssen sämtliche Rastaussparrungen passgenau an die Rastvorsprünge angepasst sein. Dies kann insbesondere aufgrund der kleinen Abmessungen zu Problemen führen.

Die DE 2 449 877 A 1 bezieht sich auf einen Gliedermaßstab mit Gliedern, die in einem Winkel von 90° und 180° zueinander verrasten. Hierzu weist ein Glied zwei in dessen Längsrichtung verlaufende Nocken auf, die in Vertiefungen des anderen Gliedes einrasten.

Gegenstand der US 3,490,148 A ist ein Gliedermaßstab, bei dem Rastvorsprünge und Rastaussparungen in Gliedern ausgebildet sind.

Bei einem Gliedermaßstab nach der WO 2006/086933 A1 besteht die Möglichkeit, unter Verwendung von Gelenkplatten Glieder in 0°-, 90°-, 180°-, 270°- und 360°-Stellung zueinander zu verrasten, wobei eine Gelenkplatte vier Rastvorsprünge und eine zweite Gelenkplatte vier Rastaussparungen aufweisen.

Der DE 43 02 699 A1 ist ein Gliedermaßstab aus Holz zu entnehmen, der ein inneres und ein äußeres Rastvertiefungspaar in einem Glied und einen inneren und einen äußeren Rastkörper in einem mit diesem verbundenen weiteren Glied aufweist.

Aus der US 1,907,495 A ist ein Gliedermaßstab bekannt, der zwei Gelenkplatten aufweist, von denen eine zwei Rastvorsprünge und die andere zwei Rastaussparungen aufweisen. Mittels der Gelenkplatten besteht die Möglichkeit, die Glieder des Maßstabs ausschließlich in zwei Positionen zueinander zu verrasten.

Der vorliegenden Erfindung liegt die Aufgabe zugrunde, ein Gliedermaßstab zuvor beschriebener Art so weiterzubilden, dass ein Verrasten von über eine gemeinsame Achse zueinander verschwenkbaren Gliedern bei einfachem konstruktiven Aufbau zumindest einer der Gelenkplatten sichergestellt ist.

Zur Lösung der Aufgabe sieht die Erfindung im Wesentlichen vor, dass die erste Gelenkplatte außerdem, also zusätzlich zu den zwei ersten Rastvorsprüngen, zwei zweite diametral zu der Achse angeordnete Rastvorsprünge aufweist, dass die zweite Gelenkplatte ausschließlich zwei Rastaussparungen aufweist, und dass bei zueinander verrasteten Gelenkplatten die sich in Ausgriff mit den Rastaussparungen befindenden Rastvorsprünge sich in zumindest einer Aussparung des Gliedes erstrecken, von dem die zweite Gelenkplatte ausgeht.

Die ersten Rastvorsprünge und die zweiten Rastvorsprünge verlaufen jeweils auf einer vorzugsweise die Achse schneidenden Geraden, wobei die Geraden bevorzugterweise einen Winkel von 90° einschließen.

Abweichend vom Stand der Technik ist es nicht erforderlich, dass die zweite Gelenkplatte entsprechend der Rastpositionen in den verschiedenen Stellungen der Glieder Rastaussparrungen aufweisen muss. Vielmehr reichen zwei Rastaussparrungen in der zweiten Gelenkplatte aus, in die wahlweise einer der paarweise einander zugeordneten und diametral zur Schwenkachse verlaufenden Rastvorsprünge einrastbar sind. Die sodann nicht in Rastaussparrungen eingreifenden zwei zweiten Rastvorsprünge erstrecken sich in einer Aussparung des Gliedes, mit dem die zweite Gelenkplatte verbunden ist. Dabei kann für jeden der zweiten Rastvorsprünge eine gesonderte Aussparrung in dem Glied eingebracht sein. Es besteht jedoch auch die Möglichkeit, dass eine einzige Aussparrung vorgesehen ist, deren Erstreckung derart ist, dass die zweiten Rastvorsprünge in diese eintauchen können.

Gehen die ersten Rastvorsprünge jeweils von einem federnden Abschnitt der ersten Gelenkplatte aus, so ist eine diesbezügliche Gestaltung für die zweiten Rastvorsprünge nicht erforderlich. Vielmehr besteht die Möglichkeit, dass bei mit dem Glied verbundener ersten Gelenkplatte die zweiten Rastvorsprünge von starren Abschnitten der Gelenkplatte ausgehen.

Die zweiten Rastvorsprünge sollten auf einer die Achse schneidenden Geraden liegen, die in Längsrichtung des Gliedes sich erstreckende Längsseiten der ersten Gelenkplatte schneidet.

Insbesondere dann, wenn die zweiten Rastvorsprünge nicht von federnden Abschnitten der ersten Gelenkplatte abragen, sollte oberhalb und in Projektionsrichtung der Aussparung innerhalb dieser verlaufender Randbereich der ersten Gelenkplatte zur Erzielung einer Federwirkung von dem Längsrand ausgehenden Schlitzen begrenzt sein, wobei vorzugsweise die Schlitze schräg zur Längserstreckung des Längsrandes verlaufen.

Hierdurch ergibt sich eine federnde Wirkung der Randbereiche.

Um das Verschwenken zu erleichtern, ist insbesondere auch vorgesehen, dass Längsseiten der zweiten Gelenkplatte in Längsrichtung des diese aufweisenden Gliedes verlaufen und dass zwischen den Längsseiten der Gelenkplatte und Längsrändern des Gliedes die zumindest eine Aussparung bzw. ein Abschnitt dieser verläuft, wobei Randbereiche der Längsseiten der zweiten Gelenkplatte im Bereich der Aussparung in deren Richtung hin abgewinkelt oder gebogen sind. Somit wird das Eintauchen der Rastvorsprünge in die in dem Glied ausgebildete Aussparung bzw. ausgebildeten Aussparungen erleichtert. Bevorzugterweise ist vorgesehen, dass der erste Rastvorsprung eine pyramidenstumpfförmige Geometrie und/oder der zweite Rastvorsprung eine pyramidenabschnittsförmige Geometrie aufweisen.

Dabei sollte der achsfernliegende Rand der eine pyramidenabschnittsförmige Geometrie aufweisenden zweiten Rastvorsprünge eine Ebene aufspannen, in der angrenzender Längsrandbereich der zweiten Gelenkplatte verläuft, wobei insbesondere der Rand verrundet ist.

Die Glieder werden entsprechend dem Stand der Technik über ein Niet verbunden, der die Achse bildet. In diesem Bereich können die Gelenkplatten auf Abschnitten der Glieder abgestützt sein, die innerhalb der und zwischen den Aussparrungen verlaufen und über deren Boden vorstehen, in die die Rastvorsprünge eindringen, so dass eine Materialschwächung im Achsenbereich nicht erfolgt.

Aber auch dann, wenn sich im Achsenbereich die Aussparung zur Aufnahme eines Paars der Rastvorsprünge erstreckt, ist eine hinreichende Stabilität gegeben, sofern die erste und/oder zweite Gelenkplatte eine von der Achse durchsetzte und konzentrisch diese umgebende Bohrung aufweist, die von einem versetzt zu der von der Gelenkplatte aufgespannten Ebene verlaufenden ringförmigen Abschnitt der Gelenkplatte umgeben ist, der sich seinerseits am Boden der Aussparung abstützt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels, wobei der Schutzumfang der Erfindung allerdings durch die Ansprüche festgelegt wird.

Es zeigen:
- Fig. 1: eine Explosionsdarstellung von Abschnitten zweier Glieder eines Gliedermaßstabs mit diese gelenkig verbindenden Gelenkplatten,
- Fig. 2: einen Längsschnitt durch eine Gelenkverbindung,
- Fig. 3: ein Schnitt entlang der Linie III-III in Fig. 2,
- Fig. 4: eine erste Ausführungsform einer ersten Gelenkplatte,
- Fig. 5: eine erste Ausführungsform einer zweiten Gelenkplatte,
- Fig. 6: eine zweite Ausführungsform einer ersten Gelenkplatte,
- Fig. 7: eine zweite Ausführungsform einer zweiten Gelenkplatte,
- Fig. 8: eine dritte Ausführungsform einer ersten Gelenkplatte,
- Fig. 9: eine dritte Ausführungsform einer zweiten Gelenkplatte und
- Fig. 10: eine vierte Ausführungsform einer zweiten Gelenkplatte.

Anhand der Fig. werden Verbindungen für langgestreckte z.B. aus Holz oder Kunststoff bestehende flache Glieder eines Gliedermaßstabes erläutert, um die Glieder in zwei Stellungen zueinander zu verrasten. Insbesondere sollen die Glieder zueinander um zwei um 90° Grad voneinander abweichende Positionen verrasten können. Eine Position ist diejenige, in der die Glieder vollständig ausgefaltet bzw. fluchtend zueinander ausgerichtet sind und eine zweite Stellung ist eine solche, in der die Glieder zueinander einen Winkel α einschließen, der insbesondere 90° Grad beträgt, ohne dass hierdurch eine Einschränkung der erfindungsgemäßen Lehre erfolgen soll. Die Verrastungsmittel können jedoch auch derart ausgebildet sein, dass die Glieder z.B. einen Winkel von 45° Grad zueinander einschließen.

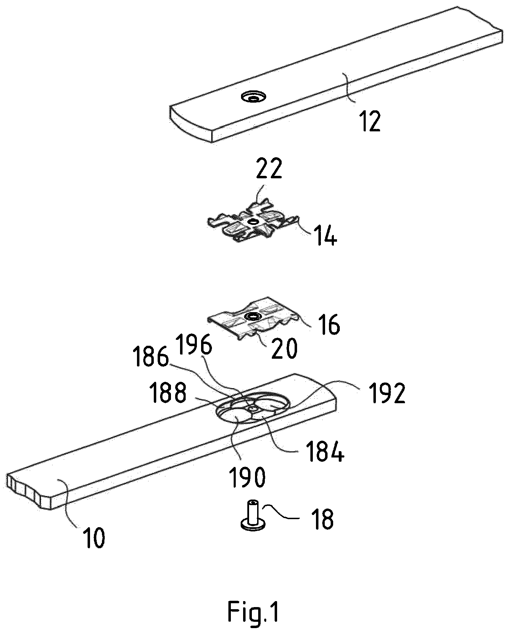

In Fig. 1 ist eine Explosionsdarstellung von zwei Gliedern 10, 12 eines Gliedermaßstabes dargestellt, die über eine aus einer ersten Gelenkplatte 14 und einer zweiten Gelenkplatte 16 bestehende Gelenkverbindung miteinander verbunden sind. Die Gelenkplatten 14, 16 sind im Endbereich der Glieder 10, 12 mit diesen verbunden. Ferner wird die Gelenkverbindung von einem Nietbolzen 18 oder ein sonstiges Verbindungselement durchsetzt, der mit den Gliedern 10, 12 verbunden ist und eine Achse vorgibt, um die die Glieder 10, 12 verschwenkbar sind.

Die Gelenkplatten 14, 16 können z.B. aus Stahlblech, wie gehärtetem Federstahl, bestehen und z.B. eine Dicke zwischen 0,3 mm und 0,4 mm aufweisen, um beispielhaft Zahlenwerte zu nennen. Die Gelenkplatten 14, 16 sind ferner vorzugsweise Stanzprägeteile.

Um die Gelenkplatten 14, 16 mit den Gliedern 10, 12 zu verbinden, ragen senkrecht zu den von den Gelenkplatten 14, 16 aufgespannten Ebenen fahnenartige Krallen ab, von denen rein beispielhaft zwei mit dem Bezugszeichen 20, 22 gekennzeichnet sind. Über die Krallen 20, 22 werden die Gelenkplatten 14, 16 in den Gliedern 10, 12 fixiert und verankert. Insoweit wird jedoch auf bekannte Techniken von Gliedermaßstäben verwiesen.

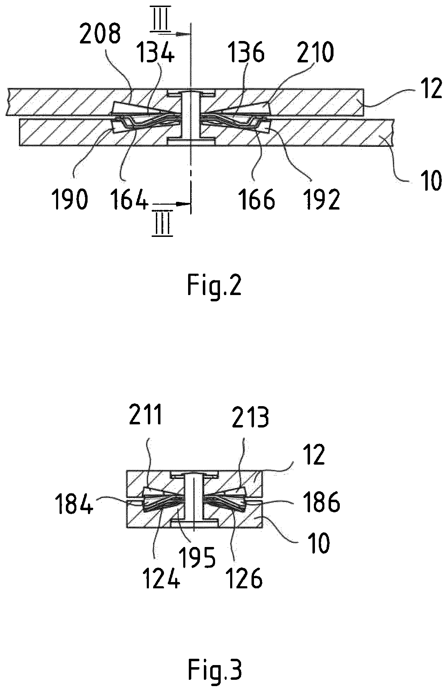

Des Weiteren sind in der Fig. 1 und entsprechend in den Schnittdarstellungen der Fig. 2 und 3 und nachstehend näher beschrieben in den Gliedern 10, 12 Aussparrungen in Bereich der Gelenkplatten 14, 16 ausgebildet, um ein Verschwenken der Glieder 10, 12 zueinander zu ermöglichen, ohne dass eine Abstandsveränderung in Achsrichtung zwischen diesen erfolgt.

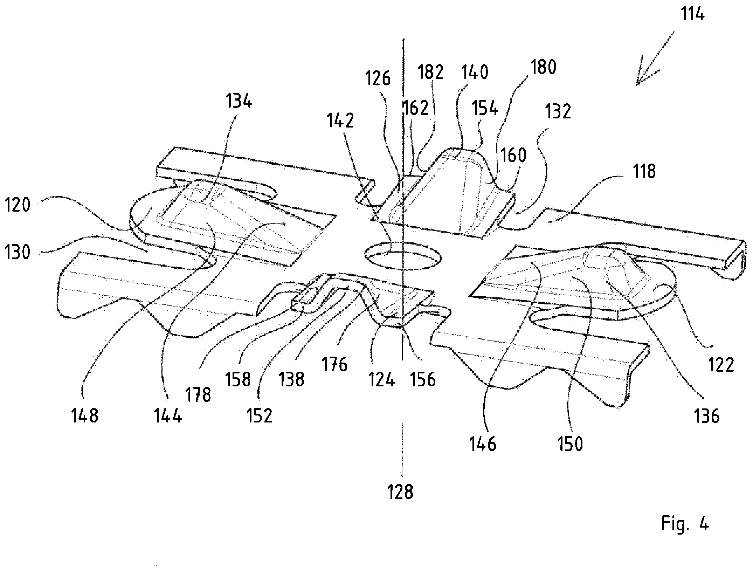

In Fig. 4 ist eine erste Ausführungsform einer ersten Gelenkplatte 114 dargestellt, die auch als Hochplatte zu bezeichnen ist. Die Gelenkplatte 114 besteht aus einem Basisabschnitt 118, der insgesamt vier federnde Abschnitte 120, 122 und 124, 126 aufweist. Die erste Rastvorsprünge 134, 136 aufweisenden federnden Abschnitte 120, 122 sind diametral zu der Achse 120 angeordnet und werden von der Längsachse der Gelenkplatte 114 geschnitten. Die federnden Abschnitte 124, 126 weisen zweite Rastvorsprünge 138, 140 auf, die zu den ersten Rastvorsprüngen 134, 136 um 90° versetzt verlaufen, und sind gleichfalls diametral zu der Achse 128 angeordnet, die durch den Nietbolzen 18 vorgegeben ist. Die zweiten Rastvorsprünge 138, 140 werden somit von der Querachse der Gelenkplatte 114 geschnitten.

Wie die zeichnerische Darstellung verdeutlicht, sind die federnden Abschnitte 120, 122, 124, 126 von dem Basiskörper 118 durch Aussparungen bzw. Schlitze getrennt, von denen zwei rein beispielhaft mit den Bezugszeichen 130, 132 gekennzeichnet sind.

Erwähntermaßen gehen von den ersten federnden Abschnitten 120, 122 die ersten Rastvorsprünge 134, 136 und von den zweiten Abschnitten 124, 126 die zweiten Rastvorsprünge 138, 140 aus, die somit - wie die ersten Rastvorsprünge 134, 136 - jeweils diametral zu der Achse 128 verlaufen und über dem Basisabschnitt 118 vorstehen. Die Achse 128 selbst durchsetzt eine Bohrung 142 des Basisabschnitts 118, die von dem Nietbolzen 18 durchdrungen ist.

Die der Bohrung 142 zugewandten Flächen 144, 146 der ersten Rastvorsprünge 134, 136 verlaufen rampenförmig und gehen verrundet in die jeweiligen schräg zueinander verlaufenden Seitenflächen 148, 150 über, um ein leichtgängiges Verschwenken der Glieder 10, 12 zueinander zu ermöglichen, wie nachstehend erläutert wird.

Die Seitenflächen 148, 150 verlaufen parallel oder in etwa parallel zur Längsachse der Gelenkplatte 114.

Die zweiten Rastvorsprünge 138, 140 weisen eine pyramidenabschnittsförmige Geometrie auf, wobei der achsfernliegende Rand 152, 154 eine Ebene aufspannt, in der die angrenzenden Randabschnitte 156, 158 bzw. 160, 162 des Basisabschnitts 118 verlaufen. Ferner sollten die Ränder 152, 154 und auch die Randabschnitte 156, 158, 160, 162 verrundet sein.

Weist die erste Gelenkplatte 114 vier Rastvorsprünge auf, also zwei erste Rastvorsprünge 134, 136 und zwei zweite Rastvorsprünge 138, 140, so besitzt die zugeordnete zweite Gelenkplatte 116, die auch als Tiefplatte zu bezeichnen ist, zwei Rastaussparungen 164, 166, die diametral zu einer Bohrung 170 verlaufen, die von dem Nietbolzen 18 durchsetzt wird und somit bei mit den Gliedern 10, 12 verbundenen ersten und zweiten Gelenkplatten 114, 116 zu der Bohrung 142 der ersten Gelenkplatte 114 fluchtet.

Die zwei Rastaussparungen 164, 166 werden im Ausführungsbeispiel von der Längsachse der zweiten Gelenkplatte 116 geschnitten.

Die Rastaussparungen 164, 166 weisen eine Innengeometrie auf, die geometrisch zumindest abschnittsweise der pyramidenstumpf- bzw. pyramidenabschnittstumpfförmigen Geometrie der ersten und zweiten Rastvorsprünge 134, 136, 138, 140 zumindest in Bezug auf die Seitenflächen entsprechen, um beim Einrasten der ersten oder zweiten Rastvorsprünge 134, 136 bzw. 138, 140 eine gewünschte Spielfreiheit sicherzustellen.

Dabei ist insbesondere vorgesehen, dass die inneren Seitenflächen 168, 170 und 172, 174 der Rastaussparungen 164, 166 einen Verlauf und einen Abstand zueinander aufweisen, der zumindest bereichsweise dem der Seitenflächen 148, 150 der ersten Rastvorsprünge 120, 122 und der Seitenflächen 176, 178 bzw. 180, 182 der zweiten Rastvorsprünge 138, 140 entsprechen.

In Abhängigkeit der Raststellung der Glieder 10, 12 zueinander, also wenn diese entweder vollständig ausgefaltet, also einen Winkel von 180° zueinander einschließen, oder fluchtend zueinander ausgerichtet sind, greifen die ersten Rastvorsprünge 134, 136 in die Rastaussparungen 164, 166 ein.

Da entsprechend dem Ausführungsbeispiel die zweiten Rastvorsprünge 138, 140, die entlang einer die Achse 128 schneidenden Geraden verlaufen, die ihrerseits parallel zur Querachse der ersten Gelenkplatte 114 verläuft, zu der Geraden, die die ersten Rastvorsprünge 134, 136 schneidet, um 90° gedreht verläuft, rasten die zweiten Rastvorsprünge 138, 140 in die Rastaussparungen 164, 166 spielfrei ein, wenn die Glieder 10, 12 um 90° zueinander verschwenkt sind.

Die nicht in die Rastaussparungen 164, 166 einrastenden Rastvorsprünge, also bei abgewinkelten Gliedern 10, 12 die ersten Rastvorsprünge 134, 136 und bei ausgefalteten Gliedern 10, 12 bzw. aufeinander liegenden Gliedern die zweiten Rastvorsprünge 138, 140, erstrecken sich in Aussparungen 184, 186 des Glieds 10, von dem die zweite Gelenkplatte 116 bzw. 16 entsprechend Fig. 1 ausgeht. Die Aussparungen 184, 186 verlaufen folglich entlang einer senkrecht zur Längsachse des Gliedes verlaufenden und die Achse 128 schneidenden Geraden.

Sind vorzugsweise zwei Aussparungen 184, 186 vorgesehen, so kann es sich hierbei auch um Abschnitte einer einzigen den Nietbolzen umgebenden Aussparung handeln, ohne dass die Erfindung verlassen wird. Insoweit sind Singular und Plural als Synonym zu verstehen.

Wie die Darstellung in Fig. 1 verdeutlicht, weist der Ausschnitt 188 des Gliedes 10, in dem die Aussparungen 184, 186 ausgebildet sind, weitere Aussparungen 190, 192 auf, in die die in den Rastaussparungen 164, 166 eingerasteten Rastvorsprünge verstellbar sind, wenn die Glieder 10, 12 zueinander verschwenkt werden. Somit ist sichergestellt, dass die Glieder 10, 12 beim Verschwenken stets mit geringem Spalt zueinander ausgerichtet sind. Die Aussparungen 190, 192 können selbstverständlich auch Abschnitte einer einzigen Aussparung sein, die durch die Vertiefung 188 gebildet ist.

In dem Glied 12, von dem die erste Gelenkplatte 114 ausgeht, können Aussparungen für die federnden Abschnitte 120, 122, 124, 126 ausgebildet sein, die in den Fig. 2 und 3 mit den Bezugszeichen 208, 210, 211, 213 gekennzeichnet sind.

Zwischen den Aussparungen 184, 186, 190, 192 erstreckt sich ein Abschnitt 195 (Fig. 3) des Gliedes 10 bis zu dessen Oberfläche hin, der eine Bohrung 196 aufweist, die von dem Nietbolzen 18 durchsetzt ist. Hierdurch ist eine gewünschte Festigkeit im Achsbereich gewährleistet.

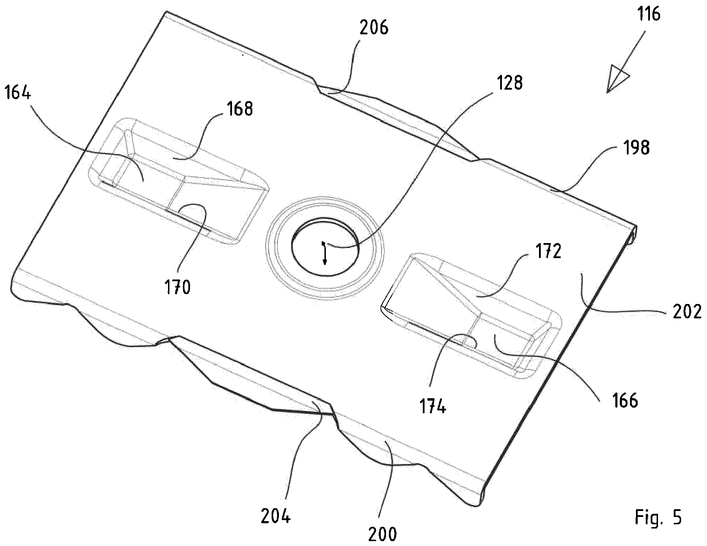

Wie die Darstellung der Fig. 5 verdeutlicht, sind im Mittenbereich der Längsränder 198, 200 des in Draufsicht rechteckförmigen Basisabschnitts 202 der zweiten Gelenkplatte 116 nach innen versetzte - also in Richtung der Achse 128 - verlaufende Bereiche 204, 206 ausgebildet, die verrundete Ränder aufweisen und sich oberhalb der ersten Aussparungen 184, 186 erstrecken, um im erforderlichen Umfang die Rastvorsprünge, die nicht in die Rastaussparungen 164, 166 einrasten, in die ersten Aussparungen 184, 186 eintauchen zu lassen.

Die Erstreckung der ersten Aussparungen 184, 186 in Längsrichtung des Gliedes 10 ist dabei derart, dass beim Einrasten von Rastvorsprüngen 134, 136 bzw. 138, 140 in die Rastaussparungen 164, 166 die in den ersten Aussparungen 184, 186 sich befindenden Rastvorsprünge 138, 140 bzw. 134, 136 Begrenzungen der ersten Aussparungen 184, 186 nicht berühren.

In den zeichnerischen Darstellungen sind auch die von den Basisabschnitten 118, 202 abgewinkelten in den Längsrändern verlaufenden Krallen erkennbar, mittels der die Gelenkplatten 114, 116 in den Gliedern 10, 12 fixiert werden.

Bezüglich der ersten und zweiten Aussparungen 184, 186 bzw. 190, 192 in dem Glied 10 sei ergänzend auf die Fig. 2 und 3 verwiesen. So erkennt man in Fig. 2 die zweiten Aussparungen 190, 192 in dem ersten Glied 10, in dem sich die Rastaussparungen 164, 166 der zweiten Gelenkplatte erstrecken.

In Fig. 3 sind die Aussparungen 184, 186 erkennbar, in die die zweiten Rastvorsprünge 138, 140 eintauchen.

In den Rastaussparungen 164, 166 sind bei ausgefalteten bzw. aufeinanderliegenden Gliedern 10, 12 die ersten Rastvorsprünge 134, 136 rastend eingebracht.

Das zweite Glied 12 weist im Bereich der ersten und zweiten Rastvorsprünge 134, 136, 138, 140 gleichfalls Aussparungen auf, um beim Verschwenken der Glieder 10, 12 zueinander ein Ausweichen der federnden Abschnitte 120, 122, 124, 126 zu ermöglichen. Die entsprechenden Aussparungen sind in den Fig. 2 und 3 mit den Bezugszeichen 208, 210, 211, 213 gekennzeichnet.

In der Schnittdarstellung der Fig. 3 wird erkennbar, dass die zweiten Rastvorsprünge 138, 140, in die ersten Aussparungen 184, 186 des ersten Gliedes 10 eingreifen, wenn die Glieder 10, 12 bezüglich ihrer Längsachsen parallel zueinander ausgerichtet sind.

Bei der aus den Gelenkplatten 114, 116 bestehenden Gelenkverbindungen nach den Fig. 4 und 5 stützen sich die Gelenkplatten 114, 116, d. h. deren Basisabschnitte 118, 202 auf Abschnitten der Glieder 10, 12 ab, die über dem Boden der Aussparungen 184, 186, 190, 192 bzw. der Vertiefung 188 vorstehen.

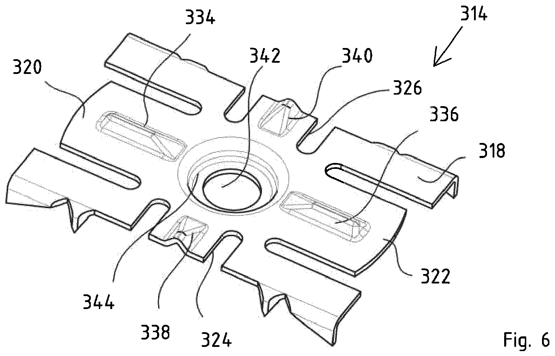

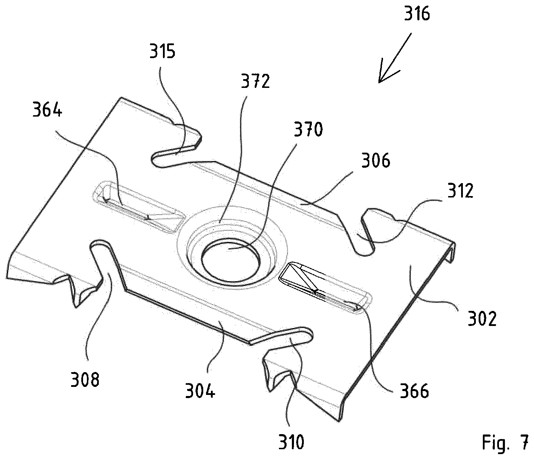

In den Fig. 6 und 7 ist eine zweite Ausführungsform von eine Gelenkverbindung bildenden Gelenkplatten 314, 316 dargestellt, die in Bezug auf die Rastvorsprünge bzw. Rastaussparungen denen der Gelenkplatten 114, 116 entsprechen. Die Bezugszeichen für die Rastvorsprünge und -aussparungen sind von 134, 136, 138, 140 in 334, 336, 338, 340 bzw. von 164, 166 in 364, 366 geändert worden.

Der Basisbereich oder -abschnitt 318 der ersten Gelenkplatte 314 unterscheidet sich von dem der Fig. 4 dahingehend, dass die von einem Nietbolzen 18 im Mittenbereich des Basisabschnitts 318 durchsetzte Bohrung 342 von einem ringförmigen Randbereich 344 umgeben ist, der in der zeichnerischen Darstellung nach unten versetzt zu der von dem Basisabschnitt 318 aufgespannten Ebene verläuft und sich am Boden der Aussparung bzw. Vertiefung 188 (in Fig. 1) abstützt, wenn die Gelenkplatte 314 mit einem Glied verbunden ist. Mit anderen Worten weist das entsprechende Glied im Bereich der Achse keine Erhebung auf, die über dem Boden der für das Bewegen der federnden Abschnitte 320, 322, 324, 326 mit den Rastvorsprüngen 334, 336, 338, 340 benötigten Aussparungen vorsteht. Entsprechendes gilt für die zweite Gelenkplatte 316, deren im Mittenbereich des Basisabschnitts 302 verlaufende Bohrung 370 gleichfalls von einem ringförmigen Rand 372 umgeben ist, der zurückversetzt zur Oberfläche des Basisabschnitts 302 verläuft.

Des Weiteren unterscheidet sich die zweite Gelenkplatte 316 von der der Fig. 5 dahingehend, dass Längsrandabschnitte 304, 306 federnd dadurch ausgebildet sind, dass diese von schräg zur Längsachse der Gelenkplatte 316 verlaufende Schlitze 308, 310, 312, 315 begrenzt sind, so dass beim Verschwenken der die Rastvorsprünge 334, 336, 338, 340 aufweisenden ersten Gelenkplatte 314 eine Leichtgängigkeit erzielbar ist. Unabhängig hiervon sind die entsprechenden mittig verlaufenden Randabschnitte 304, 306 verrundet und weisen abgewinkelte Randbereiche auf, die sich in Richtung des Gliedes erstrecken, mit dem die zweite Gelenkplatte 316 verbunden ist.

Im Bereich der Randabschnitte 304, 306 tauchen die Rastvorsprünge in die Ausnehmungen ein, die nicht in die Rastaussparungen 364, 366 einrasten.

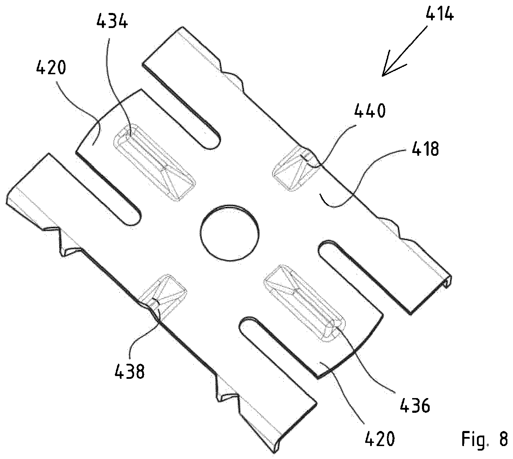

Geht bei den ersten Gelenkplatten 114, 314 gemäß den Fig. 4 und 6 jeder Rastvorsprung 134, 136, 138, 140 bzw. 334, 336, 338, 340 von einem federnden Abschnitt 120, 122, 124, 126 bzw. 320, 322, 324, 326 aus, so unterscheidet sich nach einem weiteren Ausführungsbeispiel gemäß Fig. 8 eine erste Gelenkplatte 414 von diesen dahingehend, dass nur die entlang der Längsachse der Gelenkplatte 414 verlaufenden ersten Rastvorsprünge 434, 436 von federnden Abschnitten 420, 422 eines Basisabschnitts 418 abragen, wohingegen zweite Rastvorsprünge 438, 440 von einem nicht federnden Abschnitt des Basisabschnitts 418 ausgehen, sofern man den Basisabschnitt 418 als nicht federnd definiert. Mit anderen Worten gehen die zweiten Rastvorsprünge 438, 440 nicht von Bereichen des Basisabschnitts 418 aus, die durch Schlitze begrenzt sind, um eine Federeigenschaft zu erzielen. Ansonsten weist die Gelenkplatte 414 einen konstruktiven Aufbau auf, der prinzipiell dem der Fig. 4 und 6 entspricht, insbesondere in Bezug auf die Geometrie der Rastvorsprünge, so dass auf die diesbezüglichen Ausführungen verwiesen wird.

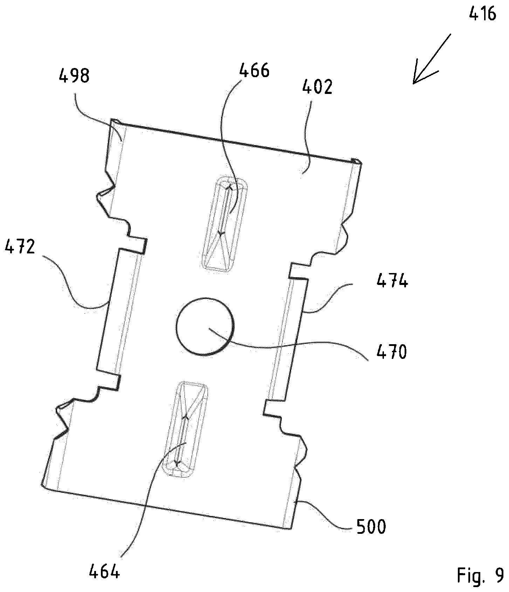

Der Gelenkplatte 414 gemäß Fig. 8 ist eine zweite Gelenkplatte 416 (Fig. 9) zugeordnet, die konstruktiv von denen der Fig. 5 und 7 dahingehend abweicht, dass im Mittenbereich der Längsränder 498, 500 des Basisabschnitts 402 der Gelenkplatte 416 in Richtung der von einem Nietbolzen durchsetzten Bohrung 470 versetzt verlaufende Ausschnitte oder Aussparungen 472, 474 vorgesehen sind, die eine Tiefe aufweisen, dass ein Kontakt der Rastvorsprünge 438, 440 bzw. 434, 436 mit der Gelenkplatte 416 bei Verrasten sowohl in der 0° - Stellung (aufeinanderliegend oder ausgefaltet) als auch in abgewinkelter Stellung der mit den Gelenkplatten 414, 416 verbundenen Glieder eines Gliedermaßstabs ausgeschlossen ist.

Wie sich aus der Fig. 9 ergibt, sind Randbereiche der Ausschnitte oder Aussparungen 472, 474 abgewinkelt, um eine Leichtgängigkeit beim Verschwenken der Glieder zueinander zu ermöglichen.

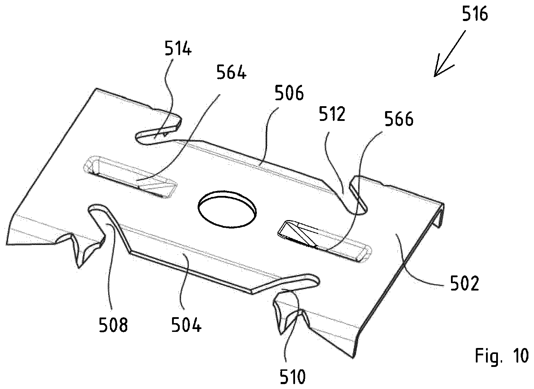

In Fig. 10 ist eine weitere Ausführungsform einer zweiten Gelenkplatte 516 dargestellt, die prinzipiell der der Fig. 7 mit der Einschränkung entspricht, dass der Basisabschnitt 502 auf einem inneren Vorsprung des Gliedes des Gelenkmaßstabs abgestützt wird (s. Bereich 195 in Fig. 3), mit dem die Gelenkplatte 516 verbunden ist. Die Rastaussparungen sind mit den Bezugszeichen 564, 566 gekennzeichnet, die den Rastaussparungen 264, 266 bzw. 364, 366 bzw. 464, 466 entsprechen.

Die mittigen Randabschnitte 504, 506 sind von Schlitzen 508, 510, 512, 514 begrenzt, um eine Federwirkung zu erzielen. Hierdurch wird zum einen das Verschwenken erleichtert und zum anderen sichergestellt, dass beim Verschwenken keine zu starken Kräfte auf die mit den Gelenkplatten verbundenen Glieder einwirkt, durch die ein Lockern erfolgen könnte.

Erfindungsgemäß wird eine Gelenkverbindung vorgeschlagen, die ausschließlich zwei Rastaussparungen benötigt, um ein Verrasten von Gliedern eines Gelenkmaßstabes in zwei voneinander abweichenden Winkelstellungen sicherzustellen. Dabei tauchen die nicht von Rastaussparungen einer zugeordneten Gelenkplatte aufgenommenen Rastvorsprünge in Aussparungen bzw. Vertiefungen des Gliedes ein, von der die die zwei Rastaussparungen aufweisende Gelenkplatte ausgeht. Somit ergibt sich ein einfacher konstruktiver Aufbau für die entsprechende Gelenkplatte, ohne dass Einbußen bezüglich des Verrastens in Kauf genommen werden müssen.

## Patentansprüche

1. Gliedermaßstab mit langgestreckten flachen Gliedern (10, 12), die paarweise über eine Gelenkverbindung miteinander und drehbar um eine Achse (128) verbunden sind, wobei die Gelenkverbindung eine erste mit einem ersten Glied und eine zweite mit einem zweiten Glied verbundene Gelenkplatte (14, 114, 314, 414; 16, 316, 416, 516) aufweist und wobei
- die erste Gelenkplatte zwei erste Rastvorsprünge (134, 136, 334, 336, 434, 436) aufweist, die diametral zu der Achse angeordnet sind, und
- die zweite Gelenkplatte zwei Rastaussparungen (164, 166, 364, 366, 464, 466, 564, 566) aufweist,
wobei die Gelenkplatten in einer ersten Stellung und in einer von der ersten Stellung abweichenden zweiten Stellung der Glieder ineinanderrasten,
**dadurch gekennzeichnet,**
**dass** die erste Gelenkplatte (14, 114, 314, 414) außerdem zwei zweite diametral zu der Achse (128) angeordnete Rastvorsprünge (138, 140, 338, 340, 438, 440) aufweist,
**dass** die zweite Gelenkplatte (16, 116, 316, 416, 516) ausschließlich zwei Rastaussparungen (164, 166, 364, 366, 464, 466, 564, 566) aufweist, und
**dass** der Gliedermaßstab so ausgestaltet ist, dass bei zueinander verrasteten Gelenkplatten die sich in Ausgriff mit den Rastaussparungen befindenden Rastvorsprünge sich in zumindest einer Aussparung (184, 186) des Gliedes (10) erstrecken, von dem die zweite Gelenkplatte ausgeht.

2. Gliedermaßstab nach Anspruch 1,
**dadurch gekennzeichnet,**
**dass** jeder der ersten und zweiten Rastvorsprünge (134, 136, 138, 140, 334, 336, 338, 340, 434, 436) von einem federnden Abschnitt (120, 122, 124, 126, 320, 322, 324, 326) der ersten Gelenkplatte (114, 314) abragt.

3. Gliedermaßstab nach Anspruch 1,
**dadurch gekennzeichnet,**
**dass** bei der mit dem Glied verbundenen ersten Gelenkplatte (414) die zweiten Rastvorsprünge (438, 440) von starren Abschnitten der Gelenkplatte ausgehen.

4. Gliedermaßstab nach zumindest einem der vorhergehenden Ansprüche,
**dadurch gekennzeichnet,**
**dass** die zweiten Rastvorsprünge (138, 140, 338, 340, 438, 440) auf einer die Achse (128) schneidenden Geraden liegen, die in Längsrichtung des Gliedes sich erstreckende Längsseiten der ersten Gelenkplatte (14, 114, 314, 414) schneidet, insbesondere senkrecht zu den Längsseiten verläuft.

5. Gliedermaßstab nach zumindest einem der vorhergehenden Ansprüche,
**dadurch gekennzeichnet,**
**dass** Längsseiten der zweiten Gelenkplatte (16, 116, 316, 416, 516) in Längsrichtung des diese aufweisenden Gliedes (10) verlaufen und dass zwischen den Längsseiten der Gelenkplatte und Längsrändern des Gliedes die zumindest eine Aussparung (184, 186) zumindest abschnittsweise verläuft.

6. Gliedermaßstab nach zumindest einem der vorhergehenden Ansprüche,
**dadurch gekennzeichnet,**
**dass** Randbereiche der Längsseiten der zweiten Gelenkplatte (116, 316, 416, 516) im Bereich der Aussparung (184, 186) in deren Richtung hin abgewinkelt oder gebogen sind.

7. Gliedermaßstab nach zumindest einem der vorhergehenden Ansprüche,
**dadurch gekennzeichnet,**
**dass** der erste Rastvorsprung (134, 136, 334, 336, 434, 436) eine pyramidenstumpfförmige Geometrie und/oder der zweite Rastvorsprung (138, 140, 338, 340, 438, 440) eine pyramidenabschnittsförmige Geometrie aufweisen.

8. Gliedermaßstab nach zumindest Anspruch 7,
**dadurch gekennzeichnet,**
**dass** ein achsfernliegender Rand der eine pyramidenabschnittsförmige Geometrie aufweisenden zweiten Rastvorsprünge (138, 140, 338, 340, 438, 440) eine Ebene aufspannt, in der ein angrenzender Längsrandbereich (156, 158, 160, 162) der ersten Gelenkplatte (114, 314, 414, 514) verläuft, wobei insbesondere der Rand verrundet ist.

9. Gliedermaßstab nach zumindest einem der vorhergehenden Ansprüche,
**dadurch gekennzeichnet,**
**dass** ein oberhalb und in Projektionsrichtung der Aussparung (184, 186) innerhalb dieser verlaufender Randbereich der zweiten Gelenkplatte (316, 516) zur Erzielung einer Federwirkung von von dem Längsrand (304, 306, 504, 506) ausgehenden Schlitzen (308, 310, 312, 315, 508, 510, 512, 514) begrenzt ist, wobei vorzugsweise die Schlitze schräg zur Längserstreckung des Längsrandes verlaufen.

10. Gliedermaßstab nach zumindest einem der vorhergehenden Ansprüche,
**dadurch gekennzeichnet,**
**dass** die erste und/oder zweite Gelenkplatte (314, 316) eine von der Achse (128) durchsetzte und konzentrisch diese umgebende Bohrung (342, 370) aufweist, die von einem versetzt zu der von der Gelenkplatte aufgespannten Ebene verlaufenden ringförmigen Abschnitt (344, 372) der Gelenkplatte umgeben ist, der sich seinerseits an dem Glied, insbesondere am Boden der Aussparung (188), abstützt.

## Claims

1. A folding ruler having elongated and flat links (10, 12) connected to one another in pairs by a joint connection and rotatably about an axis (128), wherein the joint connection has a first joint plate (14, 114, 314, 414) connected to a first link and a second joint plate (16, 316, 416, 516) connected to a second link, and wherein
- the first joint plate has two first locking projections (134, 136, 334, 336, 434, 436) arranged diametrically to the axis, and
- the second joint plate has two locking recesses (164, 166, 364, 366, 464, 466, 564, 566),
wherein the joint plates lock into one another in a first position of the links and in a second position of the links diverging from the first position,
**characterized in**
**that** the first joint plate (14, 114, 314, 414) furthermore has two second locking projections (138, 140, 338, 340, 438, 440) arranged diametrically to the axis (128), that the second joint plate (16, 116, 316, 416, 516) exclusively has two locking recesses (164, 166, 364, 366, 464, 466, 564, 566), and that the folding ruler is designed such that when the two joint plates are locked relative to one another the locking projections currently disengaged from the locking recesses extend in at least one recess (184, 186) of the link (10) from which the second joint plate originates.

2. The folding ruler according to claim 1,
**characterized in**
**that** each of the first and second locking projections (134, 136, 138, 140, 334, 336, 338, 340, 434, 436) protrudes from a springy section (120, 122, 124, 126, 320, 322, 324, 326) of the first joint plate (114, 314).

3. The folding ruler according to claim 1,
**characterized in**
**that** when the first joint plate (414) is connected to the link, the second locking projections (438, 440) protrude from rigid sections of the joint plate.

4. The folding ruler according to at least one of the preceding claims,
**characterized in**
**that** the second locking projections (138, 140, 338, 340, 438, 440) are on a straight line intersecting the axis (128) and which intersects the longitudinal sides of the first joint plate (14, 114, 314, 414) extending in the longitudinal direction of the link, in particular running vertically to the longitudinal sides.

5. The folding ruler according to at least one of the preceding claims,
**characterized in**
**that** longitudinal sides of the second joint plate (16, 116, 316, 416, 516) run in the longitudinal direction of the link (10) having said joint plate, and that the at least one recess (184, 186) runs at least in some sections between the longitudinal sides of the joint plate and the longitudinal edges of the link.

6. The folding ruler according to at least one of the preceding claims,
**characterized in**
**that** edge areas of the longitudinal sides of the second joint plate (116, 316, 416, 516) are, in the area of the recess (184, 186), angled or curved in the direction of said recess.

7. The folding ruler according to at least one of the preceding claims,
**characterized in**
**that** the first locking projection (134, 136, 334, 336, 434, 436) has a pyramid frustum-shaped geometry and/or the second locking projection (138, 140, 338, 340, 438, 440) has a pyramid section-shaped geometry.

8. The folding ruler according to at least claim 7,
**characterized in**
**that** an edge, at a distance from the axis, of the second locking projections (138, 140, 338, 340, 438, 440) having a pyramid section-shaped geometry forms a plane in which runs an adjacent longitudinal edge area (156, 158, 160, 162) of the first joint plate (114, 314, 414, 514), wherein in particular the edge is rounded.

9. The folding ruler according to at least one of the preceding claims,
**characterized in**
**that** an edge area of the second joint plates (316, 516), above and in the projection direction of the recess (184, 186) and extending inside the latter, is limited by slots (308, 310, 312, 315, 508, 510, 512, 514) extending from the longitudinal edge (304, 306, 504, 506) in order to achieve a spring effect, wherein the slots preferably run obliquely to the longitudinal extent of the longitudinal edges.

10. The folding ruler according to at least one of the preceding claims,
**characterized in**
**that** the first and/or second joint plates (314, 316) have a hole (342, 370) respectively, passed through by the axis (128) and concentrically surrounding it, which is surrounded by an annular section (344, 372) of the joint plate offset to the plane formed by the joint plate and supported in turn on the link, in particular on the bottom of the recess (188).

## Revendications

1. Mètre pliant composé de segments plats (10, 12) qui sont reliés ensemble par paire au moyen d'un raccord articulé et de manière pivotable autour d'un axe (128), sachant que le raccord articulé présente une première plaque d'articulation (14, 114, 314, 414 ; 16, 316, 416, 516) reliée à un premier segment et une seconde reliée à un second segment, et sachant que
- la première plaque d'articulation présente deux saillies d'encliquetage (134, 136, 334, 336, 434, 436) qui sont disposées diamétralement par rapport à l'axe, et
- la seconde plaque d'articulation présente deux évidements d'encliquetage (164, 166, 364, 366, 464, 466, 564, 566),
sachant que les plaques d'articulation s'encliquettent l'une dans l'autre dans une première position des segments et dans une seconde position des segments, différente de la première,
**caractérisé en ce**
**que** la première plaque d'articulation (14, 114, 314, 414) présente, de plus, deux secondes saillies d'encliquetage (138, 140, 338, 340, 438, 440) disposées diamétralement par rapport à l'axe (128),
**que** la seconde plaque d'articulation (16, 116, 316, 416, 516) présente exclusivement deux évidements d'encliquetage (164, 166, 364, 366, 464, 466, 564, 566), et que le mètre pliant est conçu de telle sorte qu'en cas de plaques d'articulation encliquetées l'une vers l'autre, les saillies d'encliquetage se trouvant imbriquées dans les évidements d'encliquetage s'étendent dans au moins un évidement (184, 186) du segment (10) d'où part la seconde plaque d'articulation.

2. Mètre pliant selon la revendication 1,
**caractérisé en ce**
**que** chacune des premières et secondes saillies d'encliquetage (134, 136, 138, 140, 334, 336, 338, 340, 434, 436) dépasse d'une section élastique (120, 122, 124, 126, 320, 322, 324, 326) de la première plaque d'articulation (114, 314).

3. Mètre pliant selon la revendication 1,
**caractérisé en ce**
**que** sur la première plaque d'articulation (414) reliée au segment, les secondes saillies d'encliquetage (438, 440) dépassent des sections fixes de la plaque d'articulation.

4. Mètre pliant selon au moins l'une des revendications précédentes,
**caractérisé en ce**
**que** les secondes saillies d'encliquetage (138, 140, 338, 340, 438, 440) reposent sur une droite coupant l'axe (128), laquelle coupe les côtés longitudinaux de la première plaque d'articulation (14, 114, 314, 414), s'étendant dans le sens longitudinal du segment, et s'étend notamment perpendiculairement aux côtés longitudinaux.

5. Mètre pliant selon au moins l'une des revendications précédentes,
**caractérisé en ce**
**que** les côtés longitudinaux de la seconde plaque d'articulation (16, 116, 316, 416, 516) s'étendent dans le sens longitudinal du segment (10) présentant ceux-ci et que ledit au moins un évidement (184, 186) s'étend au moins partiellement entre les côtés longitudinaux de la plaque d'articulation et les bords longitudinaux du segment.

6. Mètre pliant selon au moins l'une des revendications précédentes,
**caractérisé en ce**
**que**, dans la zone de l'évidement (184, 186), les zones périphériques des côtés longitudinaux de la seconde plaque d'articulation (116, 316, 416, 516) sont coudées ou recourbées en direction de l'évidement.

7. Mètre pliant selon au moins l'une des revendications précédentes,
**caractérisé en ce**
**que** la première saillie d'encliquetage (134, 136, 334, 336, 434, 436) présente une géométrie en forme de pyramide tronquée et/ou la seconde saillie d'encliquetage (138, 140, 338, 340, 438, 440) présente une géométrie en forme de section de pyramide.

8. Mètre pliant selon au moins la revendication 7,
**caractérisé en ce**
**qu'**un bord éloigné de l'axe des secondes saillies d'encliquetage (138, 140, 338, 340, 438, 440) présentant une géométrie en forme de section de pyramide sous-tend un plan dans lequel s'étend une zone de bord longitudinal (156, 158, 160, 162) voisine de la première plaque d'articulation (114, 314, 414, 514), sachant que le bord est notamment rond.

9. Mètre pliant selon au moins l'une des revendications précédentes,
**caractérisé en ce**
**que** la zone périphérique (308, 310, 312, 315, 508, 510, 512, 514) de la seconde plaque d'articulation (316, 516), au-dessus et dans le sens de projection de l'évidement (184, 186) à l'intérieur de celui-ci, est limitée afin d'obtenir un effet élastique des fentes (308, 310, 312, 315, 508, 510, 512, 514) partant du bord longitudinal (304, 306, 504, 506), sachant que de préférence, les fentes s'étendent en biais par rapport à l'extension longitudinale du bord longitudinal.

10. Mètre pliant selon au moins l'une des revendications précédentes,
**caractérisé en ce**
**que** la première et/ou seconde plaque d'articulation (314, 316) présente un perçage (342, 370) traversé par l'axe (128) et entourant celui-ci de manière concentrique, lequel perçage est entouré d'une section (344, 372) de forme annulaire de la plaque d'articulation, s'étendant de manière décalée par rapport au plan sous-tendant la plaque d'articulation, laquelle section s'appuie elle-même sur le segment, notamment sur le fond de l'évidement (188).
